# EUROPÄISCHE PATENTSCHRIFT

(11) **EP 0 806 606 B1**
(45) Veröffentlichungstag und Bekanntmachung des Hinweises auf die Patenterteilung: **02.12.1998**
(21) Anmeldenummer: 97105734.4
(22) Anmeldetag: 08.04.1997
(51) Int. Cl.: F21V 7/18, H01Q 15/16, G03B 15/06

(54) **Reflektor**
Reflector
Réflecteur

(30) Priorität: 08.05.1996 DE 19618434
(43) Veröffentlichungstag der Anmeldung: 12.11.1997
(73) Patentinhaber: Briese, Hans-Werner, 22459 Hamburg (DE)
(72) Erfinder: Briese, Hans-Werner, 22459 Hamburg (DE)
(74) Vertreter: Patentanwälte Hauck, Graalfs, Wehnert, Döring, Siemons

(56) Entgegenhaltungen:
- EP-A- 0 225 105
- DE-A- 3 124 757
- DE-B- 2 606 650
- US-A- 4 594 645

## Beschreibung

Die Erfindung bezieht sich auf einen schirmartig aufspannbaren Reflektor für Lichtwellen, elektromagnetische Wellen, akustische Wellen usw. Der Reflektor kann insbesondere für Beleuchtungszwecke in Fotografie und Film, für das Senden und Empfangen von Funkwellen, für das Sammeln von Sonnenenergie sowie für das Senden und Empfangen von Schall dienen.

In den vorerwähnten Einsatzfeldern besteht ein Bedarf für mobile Reflektoren, die zum Zwecke des Transports zusammenlegbar sind und am Einsatzort in ihre volle Größe gebracht werden können.

Aus der deutschen Patentanmeldung DE 31 24 757 A1 ist eine Blitzlampenanordnung bekannt, die als einziges mit Anspruch 1 gemeinsames Merkmal einen schirmartigen Faltreflektor hat. Bei dieser Anordnung sind an einer Haltevorrichtung für einen Lampensockel Schirmspeichen gelagert. Die Schirmspeichen stützen sich über Spreizspeichen an einem Führungsring ab. Der Führungsring ist auf dem rohrförmigen Lampensockel geführt. Durch Verschieben des Führungsringes auf dem Lampensockel ist der Faltreflektor zusammenlegbar oder aufklappbar. In aufgeklappter Stellung wird der Führungsring mit einer Rasteinrichtung am Lampensockel verrastet. Zwecks Anpassung an verschieden große Faltreflektoren können zwischen Haltevorrichtung und Lampenkörper zylindrische Sockel verschiedener Länge angeordnet werden. Bei dieser Vorrichtung ist die Lampe stets starr bezüglich des Reflektors angeordnet. Außerdem erlaubt die regenschirmartige Speichenkonstruktion nicht das Erreichen kleiner Brennweiten. Große Faltreflektoren sind mit diesem Konstruktionsprinzip nur schwer aufklappbar. Die Rasteinrichtung muß dann große Rückstellkräfte abstützen. Dies ist auch der Fall, wenn durch viele Speichen eine feine Segmentierung zwecks Annäherung an eine ideale Reflektorform erreicht werden soll.

Der Erfindung liegt die Aufgabe zugrunde, einen konstruktiv einfachen schirmartigen Reflektor zu schaffen, bei dem das zu fokussierende Element relativ zum Reflektor verschiebbar ist, so daß auch kleine Brennweiten erreichbar sind.

Die Aufgabe wird durch einen Reflektor mit den in Anspruch 1 angegebenen Merkmalen gelöst. Vorteilhafte Ausgestaltungen des Reflektors sind in den Unteransprüchen angegeben.

Der erfindungsgemäße Reflektor hat einen rohrförmigen Träger, der das zu fokussierende Element - beispielsweise eine Lampe - an einem Ende aufweist. Des weiteren hat er einen Lagerkörper, der wie die Krone eines Schirmes einen Kranz Gelenke aufweist. Im Unterschied zu bekannten Schirmkonstruktionen ist jedoch der rohrförmige Träger nicht fest, sondern axial verstellbar in dem Lagerkörper gehalten. An den Gelenken des Lagerkörpers sind Schirmspeichen gelagert, die in einem Abstand von ihren Anlenkungen an den Lagerkörper Spreizgelenke aufweisen. An diesen Spreizgelenken sind Spreizspeichen gelagert, die anderenends an einem Kranz Kniegelenke eines an dem Träger geführten Schiebers gelagert sind. Dabei sind die Spreizspeichen so bemessen, daß sie sich entgegen der beim Aufspreizen wirksamen Rückstellkräfte durch Verformung von Schirmspeichen und Schirmbespannung bis etwa zur Ebene der Spreizgelenke oder über diese hinaus zum Lagerkörper hin in eine Aufspannstellung mit einer Arretierung drücken lassen. Die Spreizspeichen entsprechen also Kniehebeln, die beim Aufspreizen bis in die Nähe des Kniehebeltotpunktes oder über diesen hinausgeschwenkt werden, um in eine stabile Aufspannstellung zu gelangen. Wenn der Schieber über die Ebene der Spreizgelenke hinaus in eine Aufspannstellung verschiebbar ist, kann die Arretierung besonders einfach durch Abstützen des Schiebers am Lagerkörper als Anschlag bewirkt werden. Dann ist die Aufspannstellung selbststabilisierend. Wenn hingegen der Schieber etwa bis kurz vor oder bis in die Ebene der Spreizgelenke verschiebbar ist, kann die Arretierung durch eine Verriegelung des Schiebers bewirkt werden, beispielsweise am Lagerkörper oder auch am Träger. Eine Verriegelung kann ferner als zusätzliche Sicherung einer selbststabilisierenden Aufspannstellung vorhanden sein. Die Verriegelung kann durch Formschluß und/ oder Kraftschluß bewirkt werden (z.B. eine verfederte Rastklinke im Schieber, die in verschiedene Vertiefungen eines Rohrstutzens des Lagerkörpers einrastbar und manuell aushebbar ist, eine Schraubverbindung zwischen einem drehbar am Schieber gelagerten Schraubenelement und einem Mutterngewinde des Lagerkörpers, eine Schnappverbindung zwischen Schieber und Lagerkörper). Die Erfindung begünstigt ein axiales Verstellen oder Verdrehen des Trägers bezüglich des Lagerkörpers und eine Fokussierung durch Verschieben des Trägers bei aufgespanntem Schirm. Falls der Schieber in Aufspannstellung bis an den Lagerkörper herangeschoben werden, sind sehr geringe Brennweiten erreichbar. Des weiteren sind sehr große und fein segmentierte Schirmreflektoren möglich, da mittels des Schiebers gerade in der Nähe des Kniehebeltotpunktes sehr hohe Aufspreizkräfte auf die Schirmspeichen ausgeübt werden können. Ein schneller Auf- und Abbau des Reflektors ist somit ohne den Einsatz von Werkzeugen oder sonstigen Hilfsmitteln möglich. Ferner begünstigt die Konstruktion ein geringes Gewicht und Transportvolumen.

Über die stufenlose Fokussierbarkeit hinaus ist auch ein schnelles Wechseln des fokussierenden Elements möglich, ohne daß der Reflektor entspannt oder demontiert werden muß. Hierzu kann der Träger der Konstruktion herausgezogen werden. Auch ist es möglich, das fokussierende Element austauschbar am Träger zu befestigen. Am entgegengesetzten Ende kann der Träger eine Einrichtung zum Ein- und/oder Auskoppeln von Energie tragen, die durch den Träger mit dem zu fokussierenden Element verbunden ist.

Bevorzugt trägt der Lagerkörper innen Führungs- und/oder Bremselemente für den rohrförmigen Träger. Zudem kann der Lagerkörper über eine Schelle drehbar mit einer Halterung verbunden sein. So kann der Lagerkörper an einem Stativ befestigt sein.

Bevorzugt ist der Abstand zwischen den Spreizgelenken und den Gelenken am Lagerkörper kleiner als der Abstand zwischen den Spreizgelenken und dem gelenkfreien Ende der Schirmspeichen. Hierdurch wird eine große wirksame Reflektorfläche erreicht. Des weiteren reicht es aus, wenn der Schieber in Aufspannstellung nur geringfügig über den Kniehebeltotpunkt hinweggeschoben ist. Dann ist der Reflektor unter geringem Kraftaufwand wieder zusammenlegbar.

Die Schirmbespannung kann an der Außenseite Säume haben, in die die Schirmspeichen eingesetzt sind. Hierdurch wird eine sehr glatte Reflektorfläche erreicht. Bevorzugt wird die Schirmbespannung mittels endseitig geschlossener Hülsen an den gelenkfreien Enden der Schirmspeichen gehalten und hierdurch an einem Verrutschen zum Lagerkörper hin gehindert.

Für verschiedene Zwecke kann die Schirmbespannung eine metallisierte Folie sein.

Zwecks Erleichterung des Aufspannens insbesondere bei sehr großen Schirmkonstruktionen kann der Schieber mit einem Kraftübertragungsorgan verbunden sein, das an der Seite des Lagerkörpers nach außen geführt ist. Das Kraftübertragungsorgan kann mittels eines manuellen oder motorischen Antriebes betätigbar sein. Insbesondere für eine ferngesteuerte Fokussierung kann der Träger mittels eines Antriebes axial bezüglich des Lagerkörpers verstellbar sein.

Der Reflektor kann beliebig viele Schirmspeichen aufweisen. Bei einer Feinsegmentierung können mindestens zwanzig Schirmspeichen vorhanden sein. Diese können aus Stabilitätsgründen aus kohlefaserverstärktem Werkstoff und/oder Stahl sein.

Der Träger für das zu fokussierende Element kann auch nach dem Aufspreizen in die vordere Öffnung des Reflektors eingeführt und von außen in einer gewünschten Lage zum Reflektor gehalten werden. Zum Führen des Schiebers kann dann der Lagerkörper einen Rohrstutzen halten. Der Rohrstutzen kann aber auch weggelassen werden, weil der Schieber von den Speichen geführt sein kann.

Der Reflektor kann auch als leicht und schnell aufspannbarer Wetterschutz, Dach oder dgl. mit erheblichen Abmessungen ausgeführt sein. Der rohrförmige Träger kann völlig weggelassen werden, da eine Führung des Schiebers durch die Speichenkonstruktion ausreicht. Die Schirmbespannung kann an den jeweiligen Schutzzweck angepaßt werden.

Nachfolgend wird die Erfindung anhand der anliegenden Zeichnung eines Ausführungsbeispiels näher erläutert. In der Zeichnung zeigen:

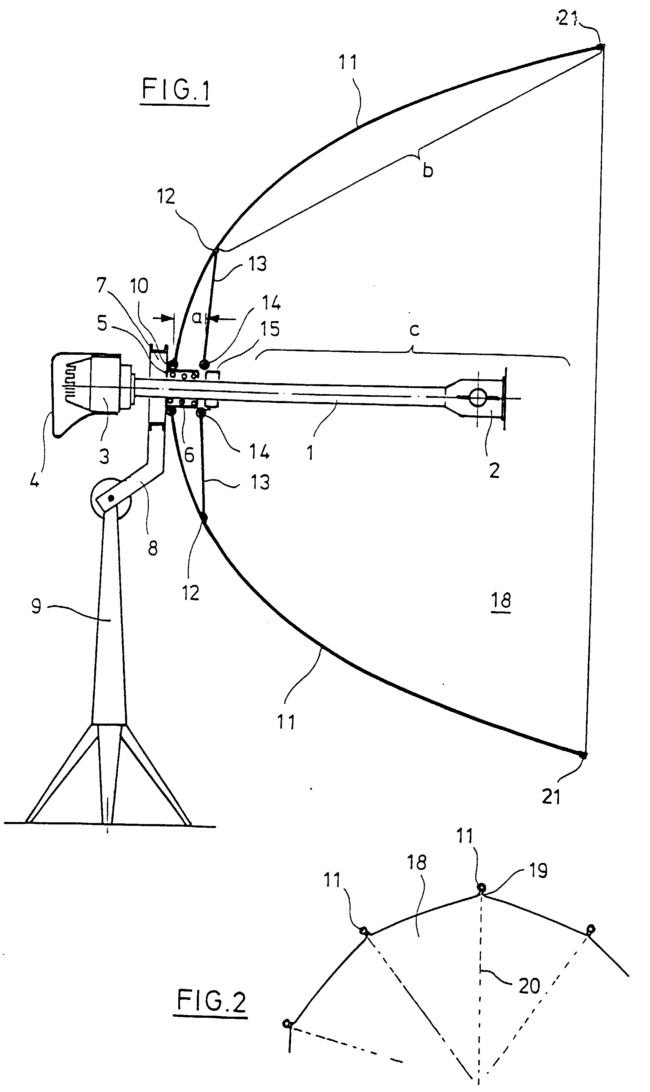

- Fig. 1: den Reflektor im Längsschnitt;
- Fig. 2: den Reflektor in einer verkleinerten Teilansicht von vorn.

Der Reflektor hat einen rohrförmigen Träger 1, der einenends einen Lampenkopf 2 aufweist, in dem mindestens eine Lampe angeordnet ist. Anderenends sitzt auf dem Träger 1 eine elektrische Energieversorgung 3, die einen Bügelgriff 4 aufweist.

Der rohrförmige Träger 1 ist an einem ringförmigen Lagerkörper 5 gehalten. Der Lagerkörper 5 weist zum Führen und Fixieren des Trägers 1 in der jeweils eingestellten Axial- und Drehstellung innen Teflon-Ringe 6 auf. Statt dessen können auch Rollen oder Gleitnocken vorhanden sein.

An seinem Außenumfang ist der Lagerkörper 5 mittels einer Schelle 7 und eines Halters 8 an einem Stativ 9 befestigt. Der Lagerkörper 5 ist in der Schelle 7 drehbar.

An seinem Außenumfang hat der Lagerkörper 5 einen Kranz von vierundzwanzig Gelenken 10. An die Gelenke 10 sind Schirmspeichen 11 gelenkt. Die Schirmspeichen 11 haben in geringem Abstand von ihren Anlenkungen an den Lagerkörper 5 Spreizgelenke 12.

Spreizspeichen 13 sind über die Spreizgelenke 12 mit den Schirmspeichen 11 verbunden. Anderenends sind die Spreizspeichen 13 an Kniegelenken 14 gelagert. Die Kniegelenke 14 sind als Kranz am Außenumfang eines ringförmigen Schiebers 15 angeordnet.

An den Schirmspeichen 11 ist eine Schirmbespannung 18 befestigt. Diese hat nach außen gerichtete Säume 19, in die die Schirmspeichen 11 eingeschoben sind. Die Säume 19 sind innen mittels Nähten 20 geschlossen, so daß die Speichen 11 die Reflektorinnenfläche nicht stören. Die Schirmbespannung 18 erstreckt sich zwischen den Spreizgelenken 12 und den der großen Öffnung des Reflektors zugeordneten Enden der Schirmspeichen 11. An diesen Enden ist die Schirmbespannung 18 mittels beidseitig geschlossener Hülsen 21 oder Kugeln mit Sackbohrung auf den Schirmspeichen 11 festgelegt.

Der Träger 1 kann aus einem Aluminiumrohr bestehen. Lagerkörper 5, Speichen 11, 13 und Schieber 15 sind bespielsweise aus Stahl. Die Schirmbespannung kann eine an der Innenseite metallisierte Folie sein.

Die Spreizspeichen 13 sind so bemessen, daß sie durch Betätigung des Schiebers 15 bequem in die Ebene der Spreizgelenke 12 geschoben werden können, wobei sie wie Kniehebel die elastischen Rückstellkräfte der Schirmspeichen 11 und der Bespannung 18 überwinden. Außerdem ist die Konstruktion so dimensioniert, daß sich der Schieber 15 etwas über diese, einem Kniehebeltotpunkt entsprechende Position, zum Lagerkörper 5 hin verschieben läßt, bis er an diesem anliegt. Infolge der Rückstellkräfte und der Anschlagwirkung des Lagerkörpers 5 wird der Schieber 15 in dieser gezeichneten Lage, die die Aufspannstellung des Reflektors ist, stabil gehalten. Besondere Klemm- oder Rastmittel sind hierzu nicht erforderlich.

Der Abstand a zwischen den Kniegelenken 14 und den Gelenken 10 in der Aufspannstellung ist kleinstmöglich gewählt, so daß der Abstand b zwischen den Spreizgelenken 12 und den gelenkfreien Enden der Schirmspeichen 11 mit den Hülsen 21 sehr groß ist. Hierdurch lassen sich große Reflektorflächen erzielen. Dabei läßt sich die Form des Reflektors in diesem Bereich durch die Schirmbespannung 18 beeinflussen.

Durch den geringen Abstand a zwischen den Gelenken 10 und den Kniegelenken 14 in Aufspannstellung ist es möglich, Reflektoren mit sehr kurzen Brennweiten zu erzielen.

Ein besonderes Merkmal der Konstruktion ist, daß ein sehr großer Fokusweg c zur Verfügung steht, der sich über den gesamten Bereich der Schirmbespannung 18 erstrecken kann. Die Fokussierung kann durch einfaches Verschieben des Trägers 1 bezüglich des Lagerkörpers 5 vorgenommen werden. Beliebige Über- oder Unterfokussierungen sind möglich. Das Befestigungselement in Form einer Schelle 6 ermöglicht ein Drehen des Reflektors um die Trägerachse.

Der Reflektor läßt sich durch Schieben des Schiebers 15 vom Lagerkörper 5 weg zusammenlegen. Sobald der Schieber 15 in dieser Richtung den Kniehebeltotpunkt überschreitet, klappt die Konstruktion von selbst zusammen. Zusammengeklappt läßt sich die Schirmbespannung 18 leicht von den Schirmspeichen 11 abziehen und gegen eine andere Bespannung austauschen.

## Patentansprüche

1. Schirmartig aufspannbarer Reflektor mit
- einem Lagerkörper (5), in den ein rohrförmiger Träger (1) so einsetzbar ist, daß er im Lagerkörper (5) verschiebbar gehaltert ist,
- einem am Lagerkörper (5) angeordneten Kranz von Gelenken (10), mit denen Schirmspeichen (11) am Lagerkörper (5) angelenkt sind, an denen eine reflektierende Schirmbespannung (18) befestigt ist,
- einem auf dem rohrförmigen Träger (1) verschiebbaren Schieber (15), an dem ein Kranz von Kniegelenken (14) angeordnet ist, an denen Spreizspeichen (13) gelagert sind, deren zur Schirmbespannung (18) zeigendes Ende mit Spreizgelenken (12) an den Schirmspeichen (11) befestigt ist, wobei die Spreizspeichen (13) so bemessen sind, daß der Schieber (15) zum Aufspannen des Reflektors gegen die beim Aufspreizen der Schirmspeichen (11) wirkenden Rückstellkräfte etwa bis zur Ebene der Spreizgelenke (12) oder über diese hinaus zum Lagerkörper (5) hin in eine Aufspannstellung mit einer Arretierung verschiebbar ist und mit
- einem elektromagnetische oder akustische Wellen emittierenden Element (2), das an dem der Innenseite des schirmartigen Reflektors zugewandten Ende des rohrförmigen Trägers (1) angeordnet ist, so daß das Element (2) durch Verschieben des rohrförmigen Trägers (1) in dem Lagerkörper (5) in verschiedene Positionen relativ zum aufgespannten Reflektor bewegt werden kann.

2. Reflektor nach Anspruch 1, bei dem sich der Schieber (15) in Aufspannstellung am Lagerkörper (5) abstützt.

3. Reflektor nach Anspruch 1 oder 2, bei dem der Schieber (15) in Aufspannstellung von einer Verriegelung gesichert ist.

4. Reflektor nach einem der Ansprüche 1 bis 3, bei dem das emittierende Element (2) abnehmbar am Träger (1) befestigt ist.

5. Reflektor nach einem der Ansprüche 1 bis 4, bei dem der Träger (1) an dem vom emittierenden Element abgewandten Ende eine Einrichtung (3) zum Ein- und/oder Auskoppeln von Energie trägt, die durch den Träger (1) mit dem emittierenden Element (2) verbunden ist.

6. Reflektor nach einem der Ansprüche 1 bis 5, bei der der Lagerkörper (5) innen Führungs- und/oder Bremselemente (6) trägt.

7. Reflektor nach einem der Ansprüche 1 bis 6, bei dem der Lagerkörper (5) über eine Schelle (7) drehbar mit einer Halterung (8) verbunden ist.

8. Reflektor nach einem der Ansprüche 1 bis 7, bei dem der Lagerkörper (5) an einem Stativ (9) befestigt ist.

9. Reflektor nach einem der Ansprüche 1 bis 8, bei dem der Abstand (a) zwischen den Spreizgelenken (12) und den Gelenken (10) am Lagerkörper (5) kleiner als der Abstand (b) zwischen den Spreizgelenken (12) und den gelenkfreien Enden der Schirmspeichen (11) ist.

10. Reflektor nach einem der Ansprüche 1 bis 9, bei dem der Schieber (15) in Aufspannstellung nur geringfügig über den Kniehebeltotpunkt der Spreizspeichen (13) hinweggeschoben ist.

11. Reflektor nach einem der Ansprüche 1 bis 10, bei dem die Schirmbespannung (18) außen Säume (19) hat, in die die Schirmspeichen (11) eingesetzt sind.

12. Reflektor nach einem der Ansprüche 1 bis 11, bei dem die Schirmbespannung (18) mittels Hülsen (21) an den gelenkfreien Enden der Schirmspeichen (11) gehalten ist.

13. Reflektor nach einem der Ansprüche 1 bis 12, bei dem die Schirmbespannung (18) eine metallisierte Folie ist.

14. Reflektor nach einem der Ansprüche 1 bis 13, bei dem der Schieber (15) über ein Kraftübertragungsorgan mittels eines Antriebes betätigbar ist.

15. Reflektor nach einem der Ansprüche 1 bis 14, bei dem der Träger (1) mittels eines Antriebs axial bezüglich des Lagerkörpers (5) verstellbar ist.

16. Reflektor nach Anspruch 15, bei dem der Antrieb des Trägers (1) über eine Fernsteuerung steuerbar ist.

17. Reflektor nach einem der Ansprüche 1 bis 16, bei dem mindestens zwanzig Schirmspeichen (11), insbesondere vierundzwanzig Schirmspeichen (11), vorhanden sind.

18. Reflektor nach einem der Ansprüche 1 bis 17, bei dem die Speichen (11, 13) aus glasfaserverstärktem Kunststoff, aus kohlefaserverstärktem Kunststoff und/oder aus Stahl sind.

## Claims

1. An umbrella-like reflector which can be spread out, with
- a bearing body (5) into which a tubular carrier (1) can be inserted in a manner such that it is displaceably held in the bearing body (5),
- a ring of joints (10) arranged on the bearing body (5), with which joints umbrella spokes (11) are linked to the bearing body (5), and on which spokes a reflecting umbrella covering (18) is fastened,
- a slider (15) which is displaceable on the tubular carrier (1) and on which a ring of knee joints (14) is arranged, on which knee joints spreading spokes (13) are mounted whose end pointing to the umbrella covering (18) is fastened to the umbrella spokes (11) with spreading joints (12), wherein the spreading spokes (13) are dimensioned such that the slider (15), for spreading out the reflector, is displaceable against the restoring fores acting when spreading out the umbrella spokes (11), roughly up to the plane of the spreading joints (12) or beyond these towards the bearing body (5) into a spreading out position with a locking, and with
- an electromagnetic or acoustic wave emitting element (2) which is arranged at the end of the tubular carrier (1), which faces the inner side of the umbrella-like reflector, so that the element (2), by displacing the tubular carrier (1) in the bearing body (5), may be moved into various positions relative to the spread out reflector.

2. A reflector according to claim 1, in which the slider (15) in the spread out position is supported on the bearing body (5).

3. A reflector according to claim 1 or 2, in which the slider (15) in the spread out position is secured by a locking.

4. A reflector according to one of the claims 1 to 3, in which the emitting element (2) is removably fastened on the carrier.

5. A reflector according to one of the claims 1 to 4, in which the carrier (1) at the end distant to the emitting element, carries a means (3) which is for coupling or decoupling energy and which is connected to the emitting element (2) by the carrier (1).

6. A reflector according to one of the claims 1 to 5, in which the bearing body (5) on the inside carries guiding and/or braking elements (6).

7. A reflector according to one of the claims 1 to 6, in which the bearing body (5) via a clip (7) is rotatably connected to a holder (8).

8. A reflector according to one of the claims 1 to 7, in which the bearing body (5) is fastened to a base (9).

9. A reflector according to one of the claims 1 to 8, in which the distance (a) between the spreading joints (12) and the joints (10) on the bearing body (5) is smaller than the distance (b) between the spreading joints (12) and the joint-free ends of the umbrella spokes (11).

10. A reflector according to one of the claims 1 to 9, in which the slider (15) in the spreading out position is only slightly displaced over the knee-lever dead centre of the spreading spokes (13).

11. A reflector according to one of the claims 1 to 10, in which the umbrella covering (18) on the outside has margins (19) into which the umbrella spokes (11) are inserted.

12. A reflector according to one of claims I to 11, in which the umbrella covering (18) by way of sleeves (21) is held at the joint-free ends of the umbrella spokes (11).

13. A reflector according to one of the claims 1 to 12, in which the umbrella covering (18) is a metallised foil.

14. A reflector according to one ofthe claims 1 to 13, in which the slider (15) can be actuated via a force transmission member by way of a drive.

15. A reflector according to one of the claims 1 to 14, in which the carrier (1) is adjustable axially with respect to the bearing body (5) by way of a drive.

16. A reflector according to claim 15, in which the drive of the carrier (1) can be controlled via a remote control.

17. A reflector according to one of the claims 1 to 16, in which at least twenty umbrella spokes (11) in particular twenty four umbrella spokes (11) are present.

18. A reflector according to one of the claims 1 to 17, in which the spokes (11, 13) are of glass-fibre reinforced plastic, of carbon-fibre reinforced plastic and/or are of steel.

## Revendications

1. Réflecteur pouvant s'ouvrir comme un parapluie, comportant
- un corps formant palier (5) dans lequel un support tubulaire (1) peut être introduit de manière à être maintenu dans le corps formant palier (5) en pouvant coulisser,
- une couronne d'articulations (10) fixée au corps formant palier (5), avec laquelle sont articulés des rayons de parapluie (11), auxquels est fixée une couverture de parapluie réfléchissante (18),
- un coulisseau (15) translatable sur le support tubulaire (1), coulisseau auquel est fixé une couronne de genouillères (14), sur lesquelles sont placés des rayons d'écartement (13), dont l'extrémité dirigée vers la couverture de parapluie (18) est fixée par des articulations d'écartement (12) aux rayons de parapluie (11), les rayons d'écartement (13) étant calculés de telle manière que le coulisseau (15) peut être déplacé pour l'ouverture du réflecteur contre les forces de rappel agissant lors de l'ouverture par écartement des rayons de parapluie (11) à peu près jusqu'au plan des articulations d'écartement (12) ou au-delà de celui-ci jusqu'au corps formant palier (5) dans une position d'ouverture avec un dispositif d'arrêt, et comportant
- un élément (2) émettant des ondes électromagnétiques ou acoustiques, qui est fixé à l'extrémité tournée vers la face intérieure du réflecteur en forme de parapluie du support tubulaire (1), de telle manière que l'élément (2) peut être amené par coulissement du support tubulaire (1) dans le corps formant palier (5) à différentes positions par rapport au réflecteur ouvert.

2. Réflecteur selon la revendication 1, dans lequel le coulisseau (15) s'appuie en position d'ouverture sur le corps formant palier (5).

3. Réflecteur selon la revendication 1 ou 2, dans lequel le coulisseau (15) est bloqué en position d'ouverture par un verrouillage.

4. Réflecteur selon l'une des revendications 1 à 3, dans lequel l'élément émetteur (2) est fixé au support (1) de manière amovible.

5. Réflecteur selon l'une des revendications 1 à 4, dans lequel le support (1) porte, à l'extrémité opposée à l'élément émetteur, un dispositif (3) pour le couplage et/ou le découplage d'énergie, qui est relié par le support (1) à l'émetteur (2).

6. Réflecteur selon l'une des revendications 1 à 5, dans lequel le corps formant palier (5) porte à l'intérieur des éléments de guidage et/ou de freinage (6).

7. Réflecteur selon l'une des revendications 1 à 6, dans lequel le corps formant palier (5) est relié par un collier (7) à un support (8) avec possibilité de tourner.

8. Réflecteur selon l'une des revendications 1 à 7, dans lequel le corps formant palier (5) est fixé à un pied (9).

9. Réflecteur selon l'une des revendications 1 à 8, dans lequel la distance (a) entre les articulations d'écartement (12) et les articulations (10) sur le corps formant palier (5) est plus petite que la distance (b) entre les articulations d'écartement (12) et les extrémités dépourvues d'articulations des rayons de parapluie (11).

10. Réflecteur selon l'une des revendications 1 à 9, dans lequel le coulisseau (15) en position d'ouveture n'est poussé que très faiblement au-delà du point mort des genouillères des rayons d'écartement (13).

11. Réflecteur selon l'une des revendications 1 à 10, dans lequel la couverture de parapluie (18) comporte des ourlets extérieurs (19), dans lesquels sont introduits les rayons de parapluie (11).

12. Réflecteur selon l'une des revendications 1 à 11, dans lequel la couverture de parapluie (18) est tenue au moyen de douilles (21) aux extrémités dépourvues d'articulations des rayons de parapluie (11).

13. Réflecteur selon l'une des revendications 1 à 12, dans lequel la couverture de parapluie (18) est une feuille métallisée.

14. Réflecteur selon l'une des revendications 1 à 13, dans lequel le coulisseau (15) peut être actionné par l'intermédiaire d'un organe de tranmission de force d'un entraînement.

15. Réflecteur selon l'une des revendications 1 à 14, dans lequel le support (1) peut être déplacé, au moyen d'un entraînement, axialement par rapport au corps formant palier (5).

16. Réflecteur selon la revendication 15, dans lequel l'entraînement du support (1) peut être commandé par l'intermédiaire d'une télécommande.

17. Réflecteur selon l'une des revendications 1 à 16, dans lequel il existe au moins vingt rayons de parapluie (11), en particulier vingt-quatre rayons de parapluie (11).

18. Réflecteur selon l'une des revendications 1 à 17, dans lequel les rayons (11, 13) sont en matière synthétique renforcée par des fibres de verre, en matière synthétique renforcée par des fibres de carbone et/ou en acier.
